# EUROPÄISCHE PATENTANMELDUNG

(11) **EP 0 565 491 A1**
(43) Veröffentlichungstag der Anmeldung: **13.10.1993**
(21) Anmeldenummer: 93810250.6
(22) Anmeldetag: 06.04.1993
(51) Int. Cl.: B23B 31/02, B23B 51/12

(54) **Kupplungsvorrichtung, insbesondere zur Kupplung eines Werkzeughalters mit einer Antriebswelle**

(30) Priorität: 10.04.1992 CH 1188/92
(71) Anmelder: DORNAG AG, CH-2562 Port (CH)
(72) Erfinder: Bütikofer, Willy, CH-2558 Aegerten (CH)
(74) Vertreter: Tschudi, Lorenz

(57) **Zusammenfassung**

Die Kupplungsvorrichtung (4) wird auf den Befestigungsschaft (3) der Antriebswelle (2) einer Diamant-Kernbohrmaschine aufgesetzt. Die Kupplungsvorrichtung (4) wird mit Hilfe einer Spannschraube (5) am Befestigungsschaft (3) drehfest montiert. In die axiale Bohrung (36) der Kupplungsvorrichtung (4) wird der Befestigungsschaft (6) eines Werkzeughalters (7) eingeführt und mit einer in eine Querbohrung (8) der Kupplungsvorrichtung (4) eingeführten Spannschraube drehfest in der Kupplungsvorrichtung (4) gehalten. Auf einen mit einem Aussengewinde versehenen Befestigungszapfen (10) des Werkzeughalters (7) wird das Bohrrohr (11) aufgeschraubt. Mit diesem System können die Nachteile der Vorrichtungen des Standes der Technik, wie Beschädigungen des Gewindes der Antriebswelle, Unstabilitäten, schwer lösbare Gewinde bei Klemmen des Bohrrohres, usw. vermieden werden.

## Beschreibung

Die vorliegende Erfindung bezieht sich auf eine Kupplungsvorrichtung, insbesondere zur Kupplung eines Werkzeughalters mit einer Antriebswelle, auf einen mit der Kupplungsvorrichtung zu verbindenden Werkzeughalter, eine Verlängerungvorrichtung zur Verbindung einer Kupplungsvorrichtung mit einem Werkzeughalter, auf eine Antriebswelle , insbesondere für eine Kernbohrmaschine sowie auf eine Kernbohrmaschine. Bei bekannten Kernbohrmaschinen, insbesondere Diamant-Kernbohrmaschinen, ist die Antriebswelle an ihrem von der Antriebsseite abgewandten Ende mit einem ein Aussengewinde aufweisenden Anschlussteil versehen, auf welchem das mit einem Innengewinde versehene Bohrrohr aufgeschraubt wird. Da das Bohrrohr sehr häufig gewechselt werden muss, führte dies zu Beschädigungen des Gewindes. Im weiteren ist diese bekannte Verbindung schwer lösbar, wenn es zu einem Klemmen des Bohrrohres führt, nachdem beispielsweise das Bohrrohr auf ein Armierungseisen aufgetroffen ist. Diese Verbindung konnte auch zu Verkrümmungen derAntriebswelle führen. Die bekannte Verbindungsart war zu ungenau, zu unstabil und konnte zu einem "Anfressen" des Gewindes führen. Im weiteren sind auch sogenannte Schnell-Kupplungsvorrichtungen vorbekannt. Diese weisen eine hohe Korrosion auf und sind schnell verschmutzt. Im weiteren werden die Dichtungen beschädigt und die Gewinde zerstört. Es erfolgen Einlaufschäden bei Rollen oder Kugeln und es treten mechanische Schäden infolge mangelnder Oberflächenhärte auf.

Es ist eine Aufgabe der vorliegenden Erfindung, die eingangs erwähnten Vorrichtungen derart auszubilden, dass die Nachteile des Standes der Technik vermieden werden können. Die Kupplungsvorrichtung soll, vorzugsweise von Hand, schnell spannbar und lösbar sein. Die Kupplungsvorrichtung soll sowohl bei Kernbohrmaschinen verwendet werden können, deren Antriebswelle an einem Ende mit einem Gewinde versehen ist als auch bei Kernbohrmaschinen, bei denen die Antriebswelle an ihrem Ende mit einem Befestigungsschaft versehen ist. Die Kupplungsvorrichtung soll sich zur Aufnahme eines Werkzeughalters eignen. Die Verlängerungsvorrichtung soll sich zum Verbinden der Kupplungsvorrichtung mit einem Werkzeughalter eignen.

Dies wird erfindungsgemäss erzielt durch die kennzeichnenden Merkmale der unabhängigenAnsprüche 1, 6, 11, 12 und 15.

Bevorzugte Ausführungsformen ergeben sich aus den abhängigen Ansprüchen.

Die erfindungsgemässen Vorrichtungen und Teile weisen den Vorteil auf, dass die Kraftübertragung absolut kraftschlüssig erfolgt und ein Spiel mit der Kupplung sicher verhindert werden kann. Auf Dichtelemente, wie O-Ringe und dgl., kann verzichtet werden. Die Verwendung von als Sicherungselemente zu unsichere und unstabile Ueberwurfmuttern kann verzichtet werden. Bei der Verwendung von Verlängerungsvorrichtungen können auch die Zugkräfte problemlos aufgenommen werden. Die Kupplungsvorrichtung sowie der Werkzeughalter und die Verlängerungsvorrichtung unterliegen keinem Verschleiss. Die erfindungsgemässen Vorrichtungsteile können mit hoher Wiederholgenauigkeit hergestellt werden. Selbst ungeübte Anwender können die erfindungsgemässen Teile und Vorrichtungen fehlerfrei und sicher verwenden.

Im folgenden werden anhand der Zeichnung Ausführungsbeispiele der Erfindung sowie deren Verwendung näher beschrieben. Es zeigen
Fig. 1 die schematische Darstellung einer Kernbohrmaschine mit einem ersten Ausführungsbeispiel der Kupplungsvorrichtung und einem ersten Ausführungsbeispiel des Werkzeughalters,
Fig. 2 einen Schnitt durch das Ende der Antriebswelle der Kernbohrmaschine mit der aufgesetzten Kupplungsvorrichtung gemäss dem ersten Ausführungsbeispiel und dem montierten Werkzeughalter gemäss dem ersten Ausführungsbeispiel der Erfindung,
Fig. 3 einen Schnitt durch den unteren Bereich einer Spannschraube und die Spannfläche des Werkzeughalters,
Fig. 4 einen Schnitt durch das Ende der Antriebswelle der Kernbohrmaschine mit aufgesetzter Kupplungsvorrichtung gemäss einem zweiten Ausführungsbeispiel der Erfindung sowie einem montierten Werkzeughalter gemäss einem zweiten Ausführungsbeispiel der Erfindung,
Fig. 5 einen Schnitt durch einen Verlängerungsteil.

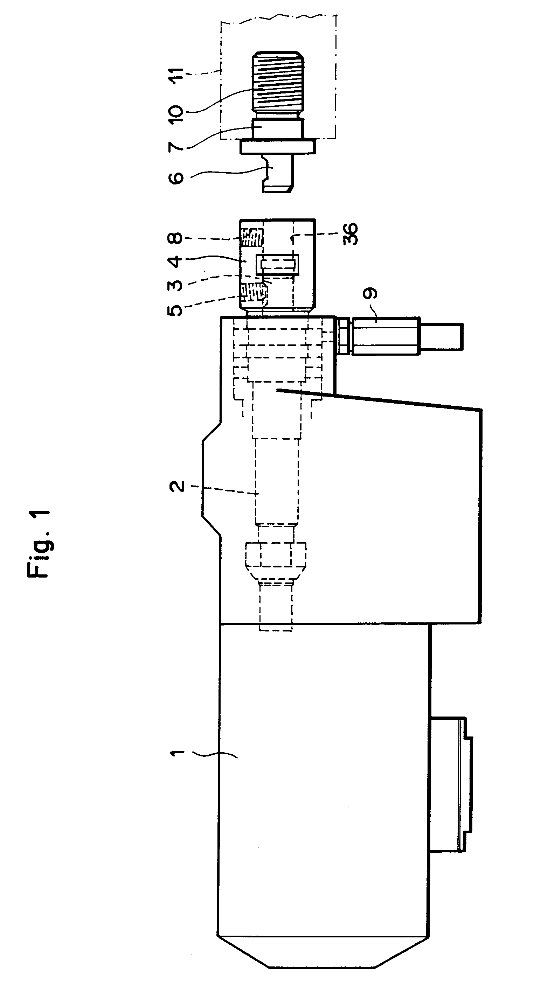

In Fig. 1 ist eine Kernbohrmaschine 1 schematisch dargestellt. Die Kernbohrmaschine 1, vorzugsweise eine Diamant-Kernbohrmaschine, wird insbesondere für Betonbearbeitung im Baugewerbe verwendet. Sie weist eine von einem nicht dargestellten Motor angetriebene Antriebswelle 2 auf. Die Antriebswelle 2 ist an ihrem Ende mit einem Befestigungsschaft 3 versehen. Auf den Befestigungsschaft 3 ist eine Kupplungsvorrichtung 4 aufgesetzt, welche mit einer Spannschraube 5 am Schaft 3 befestigt wird. An dem dem Schaft 3 gegenüberliegenden Ende der Kupplungsvorrichtung 4 wird ein mit einem Befestigungsschaft 6 versehener Werkzeughalter 7 mit einer in der Figur nicht dargestellten, in eine Bohrung 8 der Kupplungsbohrung eingeführten Spannschraube in der Kupplungsvorrichtung 4 befestigt. Die Bohrmaschine ist mit einem Wasseranschluss 9 versehen, der Wasser zu einem in der zentralen Achse des Befestigungsschaftes 3 sowie des Werkzeughalters 7 angeordneten Kanal und weiter bis zu den Schneiden des Bohrrohrs führt. Durch die axiale Führung des Wassers können Dichtungselemente vermieden werden. Auf einen mit einem Aussengewinde versehenen Zapfen 10 des Werkzeughalters wird das Bohrrohr 11 aufgeschraubt, welches an seinem dem Bolzen 10 gegenüberliegenden Ende mit den Diamantschneiden versehen ist.

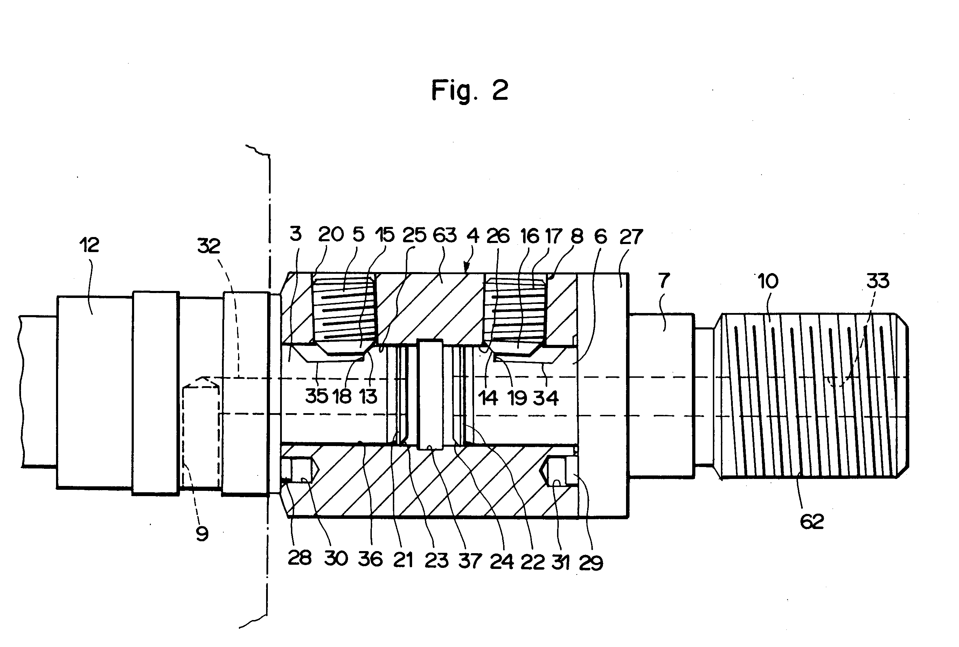

Fig. 2 zeigt einen Schnitt durch das Ende 12 der Antriebswelle, durch die auf den mit dem Ende 12 der Antriebswelle verbundenen Anschlussschaft 3 aufgesetzte Kupplungsvorrichtung 4 gemäss einem ersten Ausführungsbeispiel der Erfindung sowie durch den in der Kupplungsvorrichtung 4 befestigten Werkzeughalter 7 gemäss einem ersten Ausführungsbeispiel der Erfindung. Die Befestigungsschäfte 3 und 6 sind mit Spannflächen 13 und 14 versehen, gegen welche die kegelstumpfförmigen Enden 15 und 16 der Spannschrauben 5 und 17 drücken und damit die Kupplungsvorrichtung 4 auf dem Anschlussschaft 3 der Antriebswelle resp. den Befestigungsschaft 6 des Werkzeughalters in der Kupplungsvorrichtung drehfest sichern. Die einen Winkel von etwa 45° in bezug auf die Längsachse der Befestigungsschäfte aufweisenden Spannflächen 13 und 14 verlaufen in ihrem unteren Bereich 18 und 19 etwa senkrecht zur Längsachse der Befestigungsschäfte 3 und 6. Die Spannschraube 5 ist in eine Bohrung 20 der Kupplungsvorrichtung 4 eingeschraubt. Die Schrauben 5 und 17 resp. die Bohrungen 20 und 8 weisen vorzugsweise eine Neigung von etwa 2° zu einer senkrechten Mittelebene bezüglich der Längsachse der Kupplungsvorrichtung 4 auf. Die Schäfte 3 und 6 weisen in ihrem vorderen Bereich eine umlaufende Nut 21 resp. 22 auf und sind in ihren vordersten Bereichen 23 und 24 konisch ausgebildet. In ihren den Spannschrauben 5 und 17 benachbarten Bereichen sind die Schäfte 3 und 6 mit angefrästen planen Flächen 25 und 26 versehen. Die Spannschrauben 5 und 17 sind an ihren oberen Enden mit einem Innensechskant versehen. Der Werkzeughalter 7 ist mit einem Anschlussflansch 27 versehen. Das Ende 12 der Antriebswelle 2 sowie der Flansch 27 des Werkzeughalters 7 sind mit exzentrisch zur Mittelachse der Kupplungsvorrichtung 4 angeordneten Zapfen 28 und 29 versehen, welche in entsprechende Bohrungen 30 und 31 der Spannvorrichtung 4 eingreifen und damit ein definiertes Positionieren der Kupplungsvorrichtung 4 bezüglich des Befestigungsschaftes 3 der Antriebswelle und des Werkzeughalters 7 bezüglich der Kupplungsvorrichtung 4 ermöglichen. Im weiteren ist aus der Fig. 2 die Wasserzuführungsleitung 9, 32, 33 ersichtlich.

Die Längsbohrung 36 der Kupplungsvorrichtung 4 weist in ihrem mittleren Bereich einen Teil 37 mit etwas grösserem Durchmesser als die Bohrung 36 auf.

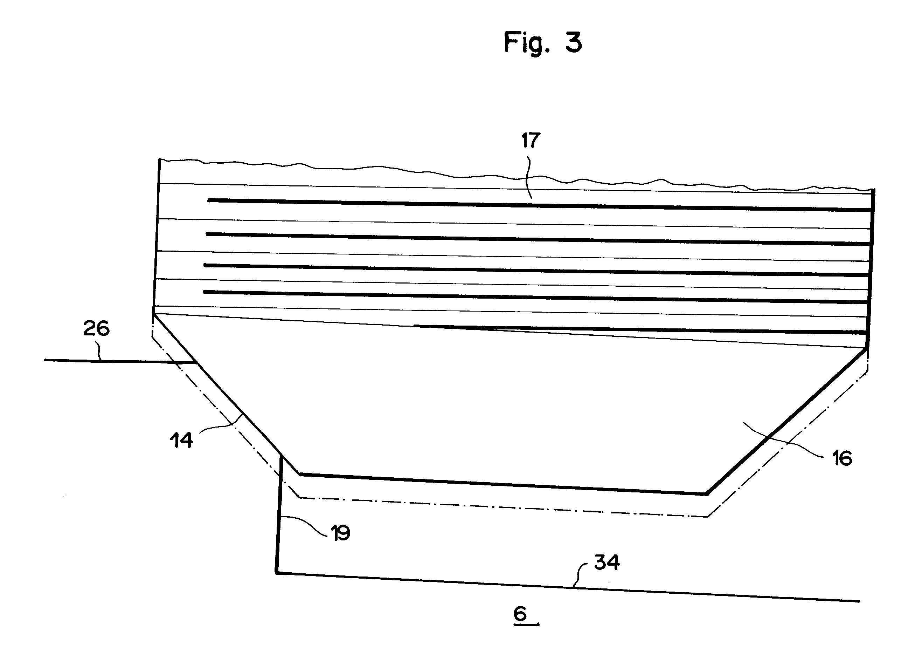

In Fig. 3 ist ein Schnitt durch den unteren Teil der Spannschraube 17 sowie der Spannfläche 14 des Befestigungsschaftes 6 dargestellt. Beim Anziehen der Spannschraube 17 - dies gilt übrigens auch für die Spannschraube 5 - entstehen derart grosse Kräfte, dass ein gewisses "Eingraben" des kegelstumpfförmigen Teiles 16 der Spannschraube 17 in die plane Spannfläche 14 erfolgt. Dadurch ergibt sich aus der ursprünglichen Linienberührung eine Flächenberührung zwischen dem kegelstumpfförmigen Teil 16 der Spannschraube 17 und der Spannfläche 14 des Befestigungsschaftes 6. Dieser "Eingrabungs-Effekt" ist sehr wichtig, da er das optimale Spannen des Befestigungsschaftes 6 in der Kupplungsvorrichtung 4 und damit auch eine optimale Drehsicherheit ermöglicht. Strichpunktiert ist in Fig. 3 die Spannschraube 17 nach dem Anziehen derselben eingezeichnet. Die etwa eine Neigung von 45° aufweisende Spannfläche 14 verläuft in ihrem unteren Bereich 19 etwa senkrecht zur Längsachse des Schaftes 6. Dadurch wird gewährleistet, dass die Spannschraube 17 nicht auf der Fläche 34 aufliegt, was zu einer Kraftübertragung auch auf die Fläche 34 führen würde. Dies gilt analog für die Spannschraube 5 und die entsprechende Fläche 35 des Schaftes 3.

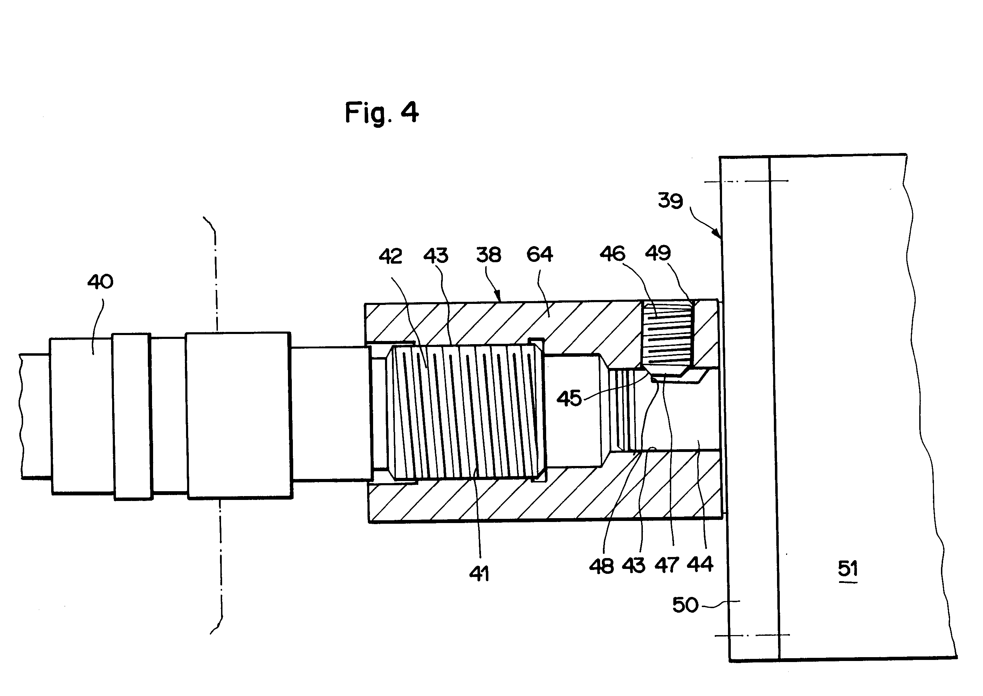

Aus Fig. 4 ist ein weiteres Ausführungsbeispiel einer Kupplungsvorrichtung 38 sowie eines Werkzeughalters 39 ersichtlich. Bei dieser Ausführungsform weist das Ende 40 der Antriebswelle nicht einen Befestigungsschaft sondern einen mit einem Aussengewinde 41 versehenen Anschlusszapfen 42 auf. Die Kupplungsvorrichtung 38 ist mit einem Innengewinde 43 versehen, welches ermöglicht, die Kupplungsvorrichtung 38 auf den Anschlusszapfen 42 aufzuschrauben. Diese zweite Ausführungsform der Kupplungsvorrichtung 38 ist dann von Vorteil, wenn Kernbohrmaschinen mit herkömmlichen Antriebswellen verwendet werden. Auf der anderen Seite ist die Kupplungsvorrichtung 38 mit einer Innenbohrung 43 versehen, in welche der Befestigungsschaft 44 des Werkzeughalters 39 eingeführt wird. Der Anschlussschaft 44 ist mit einer Spannfläche 45 versehen, gegen welche eine Spannschraube 46 drückt und damit den Schaft 44 in der Kupplungsvorrichtung drehfest sichert. Die Spannschraube 46 ist an ihrem unteren Ende 47 kegelstumpfförmig ausgebildet. Die etwa in einem Winkel von 45° zur Längsachse der Kupplungsvorrichtung 38 verlaufende Spannfläche 45 verläuft in ihrem unteren Bereich 48 etwa senkrecht zur Längsachse des Befestigungsschaftes 44. Die Spannschraube 46 ist mit einem Innensechskant versehen und verläuft etwa in einem Winkel von 2° zur Senkrechten auf die Längsachse der Kupplungsvorrichtung 38 und ist in eine entsprechende Bohrung 49 der Kupplungsvorrichtung 38 eingeschraubt. Der Werkzeughalter 39 ist mit einem Anschlussflansch 50 versehen, an welchem das Bohrrohr 51 beispielsweise mit Schrauben befestigt ist.

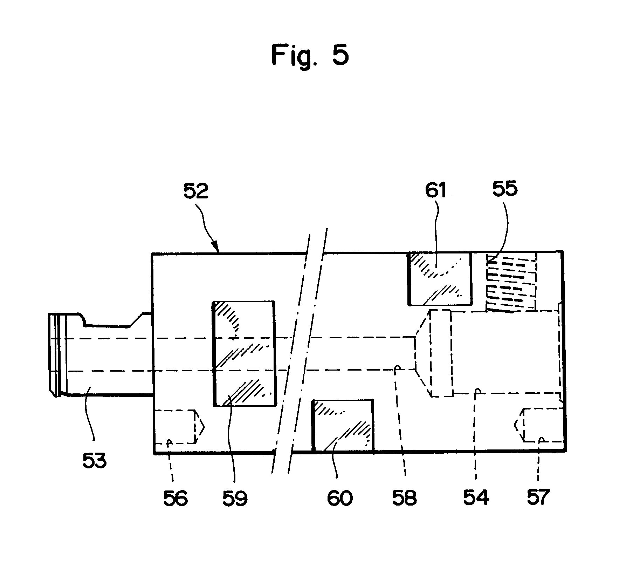

In Fig. 5 ist ein Schnitt durch eine Verlängerungsvorrichtung 52 dargestellt. Die Verlängerungsvorrichtung 52 ist mit einem Befestigungsschaft 53 versehen, der gleich ausgebildet ist wie bei den Ausführungsformen gemäss den Fig. 2 bis 4. Der Befestigungsschaft 53 wird in einer Kupplungsvorrichtung 4 oder 38 gemäss den Fig. 2 oder 4 montiert. An dem dem Schaft 53 gegenüberliegenden Ende der Verlängerungsvorrichtung 53 ist eine Bohrung 54 angeordnet, in welche der Befestigungsschaft, beispielsweise eines Werkzeughalters gemäss der Fig. 2 oder 4 eingesetzt wird. In einer in einem Winkel von etwa 2° zur Längsachse des Verlängerungsteiles 52 verlaufenden Bohrung 55 wird eine Spannschraube zur Sicherung des Befestigungsschaftes in der Bohrung 54 eingeschraubt. Im weiteren weist der Verlängerungsteil 52 an seinen beiden Enden exzentrisch zur Mittelachse angeordnete Bohrungen 56 und 57 auf, in welche entsprechende Bolzen derAnschlussteile eingeführt werden, um den Verlängerungsteil gegenüber den Anschlussteilen definiert positionieren zu können. DerVerlängerungsteil könnte anstelle einer oder beider Bohrungen 56 und 57 auch Zapfen aufweisen, die dann in entsprechende Bohrungen der Anschlussteile eingreifen würden. Im weiteren weist der Verlängerungsteil 52 eine zentrale Wasserführung 58 auf. Angefräste plane Flächen 59, 60 und 61 dienen zumAnsetzen von Werkzeugen. Solche Flächen sind vorzugsweise auch bei der Kupplungsvorrichtung und dem Werkzeughalter vorgesehen.

Die bei allen beschriebenen Ausführungsbeispielen vorhandenen Spannschrauben werden mit einem langen Hebel angezogen, wobei die Kraftübertragung über die schiefe Ebene der Befestigungsschäfte erfolgt. Infolge der sehr hohen auftretenden Kräfte erfolgt die in bezug auf Fig. 3 beschriebene Verformung der Spannfläche des Schaftes. Bei den Schrauben wird vorzugsweise ein genormtes symmetrisches Normalgewinde und nicht ein Feingewinde verwendet, da die Feingewinde schnell zerstört werden. Im weiteren ist es von grossem Vorteil, die Spannschrauben zu schmieren. Die beschriebenen Teile sollten eine Oberflächenhärte von mindestens 60 HRC aufweisen und genügend gegen Korrosion geschützt sein.

Bei bekannten Werkzeugaufnahme- resp. Spannvorrichtungen wurden die Spannschrauben in im Querschnitt runde Ausnehmungen im Schaft eingeführt und spannten infolge axialer Verschiebung der Schraube bezüglich der Ausnehmung . Bei diesen bekannten Vorrichtungen konnte nie die optimale Kraftübertragung wie bei den beschriebenen Ausführungsbeispielen der Erfindung erzielt werden. Wurde bei bekannten Vorrichtungen eine zu grosse Anzugskraft auf die Spannschrauben durch einen entsprechend langen Hebel ausgeübt, so führte dies teilweise zu Beschädigungen des Schraubenkopfes, insbesondere des Innensechskantes.

## Patentansprüche

1. Kupplungsvorrichtung, insbesondere zur Kupplung eines Werkzeughalters mit einer Antriebswelle, gekennzeichnet durch einen Mantel (63; 64) und mindestens eine axiale Bohrung (36; 43) zur beidseitigen Aufnahme entsprechender Anschlussteile von den mit der Kupplungsvorrichtung zu verbindenden Elementen, wobei im Mantel (63; 64) der Kupplungsvorrichtung (4; 38) mindestens eine quer zur Längsachse der Kupplungsvorrichtung verlaufende Bohrung (8, 20; 49) zur Aufnahme einer Spannschraube angeordnet ist.

2. Kupplungsvorrichtung nach Patentanspruch 1, dadurch gekennzeichnet, dass die axiale Bohrung auf der einen Seite der Kupplungsvorrichtung (38) mit einem Innengewinde (43) versehen ist.

3. Kupplungsvorrichtung nach Patentanspruch 1, dadurch gekennzeichnet, dass zwei Querbohrungen (8, 20) zur Aufnahme von Spannschrauben angeordnet sind.

4. Kupplungsvorrichtung nach einem der vorangehenden Patentansprüche, dadurch gekennzeichnet, dass die Querbohrungen (8,20) einen Winkel von etwa 2° mit der Senkrechten zur Längsachse der Kupplungsvorrichtung einschliessen.

5. Kupplungsvorrichtung nach einem der vorangehenden Patentansprüche, dadurch gekennzeichnet, dass sie exzentrisch zur axialen Bohrung (36; 43) mindestens eine weitere Längsbohrung (30, 31) zurAufnahme eines Bolzens (28, 29) eines mit der Kupplungsvorrichtung zu verbindenden Teils und/oder mindestens einen exzentrisch zur axialen Bohrung angeordneten Bolzen aufweist.

6. Werkzeughalter zur Verbindung mit einer Kupplungsvorrichtung nach einem der vorangehenden Patentansprüche, dadurch gekennzeichnet, dass er einen Befestigungsschaft (6; 44) mit einer schräg zur Längsachse des Befestigungsschaftes verlaufenden Spannfläche (14; 45) aufweist.

7. Werkzeughalter nach Patentanspruch 5, dadurch gekennzeichnet, dass die Spannfläche (14; 45) in einem Winkel von etwa 45° zur Längsachse des Schaftes (6; 44) verläuft.

8. Werkzeughalter nach Patentanspruch 6 oder 7, dadurch gekennzeichnet, dass die Spannfläche (14; 45) in ihrem der Längsachse des Schaftes (6; 44) zugewandten Bereich (19; 48) abgewinkelt ausgebildet ist.

9. Werkzeughalter nach einem der Patentansprüche 6 bis 8, dadurch gekennzeichnet, dass er einen, ein Aussengewinde (62) aufweisenden Befestigungszapfen (10) zur Befestigung eines Werkzeuges aufweist.

10. Werkzeughalter nach einem der Patentansprüche 6 bis 8, dadurch gekennzeichnet, dass er einen Flansch (50) zur Befestigung eines Werkzeuges aufweist.

11. Verlängerungsvorrichtung zur Verwendung mit einer Kupplungsvorrichtung nach einem der Patentansprüche 1 bis 5 und einem Werkzeughalter nach einem der Patentansprüche 6 bis 10, dadurch gekennzeichnet, dass sie auf der einen Seite einen Befestigungsschaft (53) zur Einführung in die Kupplungsvorrichtung und auf der anderen Seite eine Längsbohrung (54) zur Aufnahme des Werkzeughalters aufweist und im Bereich der Längsbohrung (54) eine Querbohrung (55) zur Aufnahme einer Spannschraube vorgesehen ist.

12. Antriebswelle, insbesondere für eine Kernbohrmaschine, dadurch gekennzeichnet, dass sie an ihrem von der Antriebsseite abgewandten Ende einen Befestigungsschaft (3) aufweist.

13. Antriebswelle nach Patentanspruch 12, dadurch gekennzeichnet, dass der Befestigungsschaft (3) mit einer schräg zur Längsachse der Antriebswelle (2, 12; 40) angeordneten Spannfläche (13) versehen ist.

14. Antriebswelle nach Patentanspruch 12 oder 13, dadurch gekennzeichnet, dass die Spannfläche (13) in ihrem der Längsachse des Schaftes (3) zugewandten Bereich (18) abgewinkelt ausgebildet ist.

15. Kernbohrmaschine mit einer Antriebswelle nach einem der Patentansprüche 12 bis 14, einer Kupplungsvorrichtung nach einem der Patentansprüche 1 bis 5 und einem Werkzeughalter nach einem der Patentansprüche 6 bis 10.
